## Europäisches Patentamt

## European Patent Office

## Office européen des brevets

(19)

(11) Veröffentlichungsnummer: **0 063 682**
**B1**

(12) **EUROPÄISCHE PATENTSCHRIFT**

(45) Veröffentlichungstag der Patentschrift:
**05.12.84**

(21) Anmeldenummer: **82101657.3**

(22) Anmeldetag: **04.03.82**

(51) Int. Cl.³: **C 01 B 3/32,** C 10 J 3/46,
C 10 J 3/84

(54) Verfahren zur Herstellung von Synthesegas durch partielle Oxidation schlackereicher Einsatzstoffe.

(30) Priorität: **27.04.81 DE 3116678**

(43) Veröffentlichungstag der Anmeldung:
**03.11.82 Patentblatt 82/44**

(45) Bekanntmachung des Hinweises auf die Patenterteilung:
**05.12.84 Patentblatt 84/49**

(84) Benannte Vertragsstaaten:
**AT BE DE FR GB IT NL SE**

(56) Entgegenhaltungen:
**EP - A - 0 019 641**
**DE - A - 2 607 745**
**DE - A - 2 834 712**
**DE - B - 1 216 259**
**FR - A - 2 087 543**
**FR - A - 2 212 293**

(73) Patentinhaber: **CHEMISCHE WERKE HÜLS AG, - RSP Patente / PB 15 - Postfach 13 20, D-4370 Marl 1 (DE)**

(72) Erfinder: **Czytko, Michael, Dr., Hustadtring 25, D-4630 Bochum (DE)**
Erfinder: **Gaupp, Karl, Dr., Kampstrasse 100, D-4370 Marl (DE)**
Erfinder: **Müller, Richard, Dr., Im Singelsen 24, D-4370 Marl (DE)**

## Beschreibung

Die Erfindung betrifft ein Verfahren zur Herstellung von Synthese- oder Brenngasen durch partielle Oxidation schlackereicher Einsatzstoffe.

Bei der Herstellung von Synthesegas aus höhersiedenden Fraktionen oder Rückständen der Erdölraffinerien kann es zu Verstopfungen in der Gaserzeugungsanlage durch abgelagerte Schlacke kommen. Die Erfindung bezweckt, durch geeignete Massnahmen solche Verstopfungen zu vermeiden.

Bekanntlich lassen sich Synthese- oder Brenngase durch partielle Oxidation kohlenstoffhaltiger Brennstoffe mittels Sauerstoff und Wasserdampf, etwa nach der DE-PS 977 548, herstellen.

Als Brennstoff kann Erdgas, Benzin, schweres Heizöl, Vakuumrückstand oder Kohle eingesetzt werden, etwa wie es in der DE-PS 2 044 310 beschrieben ist. Als Ausgangsmaterial kommen auch sauerstoffhaltige organische Verbindungen in Frage, entsprechend DE-PSS 1 917 314 oder 1 767 261, wie beispielsweise Rückstände der Oxo-Synthese. Da die Verfügbarkeit der niedrigsiedenden Kohlenwasserstoff-Fraktionen abnimmt, geht man zunehmend von höhersiedenden Fraktionen und Rückständen als Einsatzmaterial aus.

Das rohe Synthesegas, das mit 1200 bis 1600°C die Reaktionszone verlässt, wird entweder durch direkten Kontakt mit Wasser oder, unter Dampferzeugung, in einem Abhitzekessel auf etwa 300°C abgekühlt.

Beim Einsatz besonders der höhersiedenden Erdölfraktionen und Rückstände wird nun wider Erwarten beobachtet, dass sich die Schlacke nicht annähernd vollständig im Schlackefänger am Unterteil des Reaktors ansammelt, sondern in den Gasrohren der Abhitzekessel Ablagerungen bildet, die einmal den Wärmeübergang verschlechtern und zum anderen einen solchen Druckabfall bewirken, dass der Gasdurchsatz nicht mehr aufrechterhalten werden kann. Es wurde festgestellt, dass sich diese Ablagerungen nur am Ende des Gasweges durch den Abhitzekessel ausbilden in einem Bereich, in dem das Gas schon unter etwa 450°C abgekühlt ist, während sich im heisseren Bereich keine nennenswerten Ablagerungen finden.

Die Entfernung solcher fest haftender Ablagerungen aus den Rohren eines üblichen Abhitzekessels ist schwierig und mit einem längeren Produktionsausfall verbunden, besonders wenn die Rohre, wie vielfach der Fall, in Windungen angeordnet sind.

Ein naheliegender Weg, die Störungen durch Schlackeablagerungen zu vermeiden, besteht darin, den Abhitzekessel so auszulegen und zu betreiben, dass das austretende Synthesegas nicht kälter als etwa 450 bis 500°C ist. In der folgenden Stufe kann man das noch relativ heisse Synthesegas entweder durch direkten Kontakt mit Wasser, oder indirekt in einem weiteren Wärmeaustauscher weiter abkühlen bis zur gewünschten Temperatur; in diesem zweiten Wärmeaustauscher lassen sich die Ablagerungen nicht vermeiden, dieser Wärmeaustauscher ist so auszulegen, dass die Ablagerungen leicht entfernt werden können.

Nachteilig an dieser Methode ist, dass die Gaserzeugungsanlage zwecks Reinigung der zweiten Abkühlungsstufe zumindest kurzzeitig ausser Betrieb genommen werden muss.

Die Ursache für die Ablagerungen in den Gaskühlern ist zu suchen in schlackebildenden Bestandteilen, die als metallorganische Verbindungen ursprünglich im Erdöl enthalten sind und sich in den höhersiedenden Fraktionen und den Rückständen aufkonzentrieren. Hauptkomponenten sind Vanadium, Eisen und Nickel, die im Synthesegasreaktor in Oxide, Sulfide oder freie Metalle übergehen. Nebenbestandteile wie Alkalien und Erdalkalien sind nicht weiter störend.

Wider Erwarten wurde beobachtet, dass die genannten Ablagerungen in den Gaskühlern nur bei höheren Konzentrationen an Schwermetallen im Einsatzmaterial auftreten und bei geringeren Konzentrationen auch im Dauerbetrieb über mehrere Jahre ausblieben.

Wesentlich für die Konzentration an Schwermetallen im Einsatzmaterial für den Synthesegasreaktor ist deren Anreicherung durch die im folgenden beschriebene Weiterverarbeitung des rohen Synthesegases. Diese Weiterverarbeitung geschieht vorteilhaft nach DE-PSS 1 216 259 und 2 346 742:

Das rohe, den Reaktor und Abhitzekessel oder Wärmetauscher verlassende Gas enthält nach DE-PSS 1 229 217 oder 1 170 379 einen Anteil an nicht umgesetztem Kohlenstoff in Form von Russ. Die aus den Schwermetallen des Einsatzmaterials entstandene Schlacke ist zusammen mit dem Russ agglomeriert. Durch die nachfolgende Wasserwäsche werden die Russ-Schlacke-Agglomerate aus dem Gas entfernt. Aus der dabei erhaltenen wässrigen Suspension wird das Russ-Schlacke-Gemisch mit einer mit Wasser nicht mischbaren organischen Flüssigkeit, wie etwa leichtem Kohlenwasserstoff (z.B. Benzin) extrahiert. Das Benzin wird dann, nach vorheriger Vermischung der erhaltenen Suspension mit den für die Gaserzeugung verwendeten Erdölfraktionen durch Destillation für erneute Russextraktion zurückgewonnen, während das im Sumpf der Destillation anfallende Gemisch aus Russ-Schlacke und Erdölfraktion weiter zur Gaserzeugung eingesetzt wird.

Das vom Russ-Schlamm-Gemisch befreite Wasser wird erneut zum Auswaschen des Russ-Schlacke-Gemisches aus dem Rohgas eingesetzt.

Die im Reaktor aus den Nebenbestandteilen des Einsatzmaterials entstandenen Leichtmetallverbindungen sind praktisch vollständig im Wasser gelöst, die Schwermetallverbindungen dagegen nur sehr wenig. Üblicherweise wird ein Anteil von 5 bis 30% dieses Wassers ins Abwasser abgeleitet und durch frisches Wasser ersetzt, bevor es erneut zur Russwäsche eingesetzt wird. So soll die Konzentration an Metallverbindungen im gesamten System niedrig gehalten werden.

Wegen der geringen Löslichkeit wird jedoch der weit überwiegende Anteil der Schwermetallverbindungen als Agglomerat mit dem Russ über den oben beschriebenen Weg schliesslich in den Reaktor zurückgeführt. Die Konzentration der Komponenten V, Fe und Ni im Einsatzmaterial steigt dadurch um den Faktor 10 bis 20 gegenüber dem frischen Einsatzmaterial an.

Bei Verwendung von schlackearmem Einsatzmaterial stellt sich durch diese Aufkonzentrierung ein Schlackegehalt im Gas von beispielsweise 0,6 g/m³ (im Normalzustand) ein.

Ist nun die Konzentration der Schwermetalle schon im frischen Einsatzmaterial hoch, wie bei den höhersiedenden Erdölfraktionen und Rückständen der Fall, und wird sie durch die oben beschriebene Art der Russrückführung noch verstärkt, so werden solche Konzentrationen erreicht, die zu den oben beschriebenen Ablagerungen in den Gaskühlern führen.

Der Schlackegehalt im Gas beträgt in diesem Fall beispielsweise 1,6 g/cm³ (im Normalzustand).

In EP-PS 0 019 641 wird die Aufbereitung von Wasser-Kohlenstoff-Suspension beschrieben, die beim Auswaschen von Gas anfallen, das bei der Vergasung von mineralischen Rohstoffen entsteht. Das Verfahren wird angewendet auf die Herstellung von Synthesegas aus Kohlenstaub. Das Endprodukt enthält verhältnismässig grosse Mengen an mitgerissenen kohlenstoffhaltigen Feststoffen. Der Ascheanteil der Teilchen steigt mit zunehmender Kornfeinheit. Durch einfache Nasssiebung werden die schlackereichen Fraktionen abgetrennt. Die gröberen überwiegend kohlenstoffhaltigen Bestandteile werden vor den Vergasungsreaktor zurückgeführt. Die schlackereichen Teilchen liegen also von Anfang an neben den kohlenstofffreien Teilchen vor.

Die Wasser-Kohlenstoff-Suspension wird zunächst mit einem flüssigen Kohlenwasserstoff gemischt und anschliessend klassiert. Hierbei werden ausschliesslich die kohlenstoffhaltigen Substanzen agglomeriert, wodurch das Absieben der von der Agglomeration nicht betroffenen schlackereichen Teilchen wesentlich erleichtert wird. Werden die kohlenstofffreichen Teilchen vor der Behandlung mit Kohlenwasserstoff aufgemahlen, wird die Agglomeration dieser Teilchen verbessert.

Aufgabe der vorliegenden Erfindung ist es, durch geeignete Massnahmen die Schlackekonzentration auch bei Verwendung von schlackereichem Einsatzmaterial und bei Rückführung des Russes so niedrig zu halten, dass keine störenden Ablagerungen in den Gaskühlern auftreten.

Die Aufgabe wird erfindungsgemäss dadurch gelöst, dass man die Suspension von Russ-Schlacke-Agglomeraten in einem scherkrafterzeugenden Dispergiergerät behandelt, aus der wässrigen Phase einen Teil der russfreien Schlacke kontinuierlich ausschleust und aus der Phase der organischen Flüssigkeit schlackearmen Russ in den Synthesegasreaktor zurückführt.

Die Russ-Schlacke-Agglomerate liegen bereits in der Gasphase und damit auch in der wässrigen Suspension vor, bevor diese mit einer mit Wasser nicht mischbaren organischen Flüssigkeit vermischt wird. Diese Agglomerate werden erfindungsgemäss zerteilt, um danach den Russ von der Schlacke trennen zu können.

Für diese Behandlung sind mehrere parallel geschaltete einzeln absperrbare lange dünne Rohre («Harfe») geeignet, durch die die Suspension mit hoher Geschwindigkeit strömt. Diese Rohre sind wartungsarm, einfach gebaut und einfach zu betreiben, jedoch ist ein gewisser Druckabfall in Kauf zu nehmen.

Andererseits sind für die Behandlung der Suspension handelsübliche Hochleistungsdispergiergeräte wirksamer, bei denen die Scherkräfte entweder mechanisch oder durch Ultraschall erzeugt werden. Als mechanisch wirkendes Aggregat ist beispielsweise ein Rührer oder eine Kreiselpumpe geeignet.

Deutlich besser in der Wirkung sind Vorrichtungen, bei denen zwischen konzentrischen Zahnkränzen weitere Zahnkränze mit hoher Geschwindigkeit umlaufen. Für die Behandlung im Ultraschallfeld sind alle handelsüblichen Geräte mit einer hinreichenden Leistung geeignet.

Die oben beschriebenen Geräte können entweder für sich allein oder in Kombination verschiedener Geräte hintereinander geschaltet eingesetzt werden.

Durch die Behandlung der Suspension in einem scherkrafterzeugenden Dispergiergerät werden die Russ-Schlacke-Agglomerate zerstört, so dass einerseits der Russ mit einem nur noch geringen Schlackegehalt nach der üblichen Zugabe von Benzin in die Benzinphase übergeht, während die Schlacke nahezu russfrei überwiegend in der wässrigen Phase verbleibt.

Damit ist die weitgehende Trennung von Russ und Schlacke erreicht, und die bisher zwangsläufige Rückwanderung der Schlacke bei Rückführung des Russes in den Reaktor und die dadurch bedingte Anreicherung der Schlacke im Synthesegas wird verhindert.

Infolgedessen treten in den Gaskühlern keine störenden Ablagerungen mehr auf.

Die Behandlung der Russ-Schlacke-Suspension in einem scherkrafterzeugenden Dispergiergerät kann vor oder während der Behandlung mit Benzin erfolgen. Die russhaltige Benzinphase und die schlackehaltige wässrige Phase werden in bekannter Weise in dem nachgeschalteten Absitzbehälter voneinander getrennt. Die Benzinphase wird in bekannter Weise verarbeitet. Aus der wässrigen Phase wird in bekannter Weise ein Anteil von 5 bis 30% entnommen und nach Abfiltrieren der Schlacke ins Abwasser abgeleitet, womit auch die im Wasser gelösten Substanzen ausgeschleust werden.

Obwohl die Schlacke durch die erfindungsgemässe Behandlung der Suspension nicht vollständig vom Russ abgetrennt wird und auch aus dem Wasserkreislauf nur ein Teil ausgeschleust wird, kann die Schlackekonzentration im Reaktor in jedem Fall hinreichend niedrig gehalten werden, um die störenden Ablagerungen in den Gaskühlern sicher zu verhindern. Die mit dem Waschwasser auf den Russwascher zurückgeführten Schlacketeilchen bilden keine neuen Agglomerate mit Russ.

Das erfindungsgemässe Verfahren hat die folgenden weiteren Vorteile:

Der Russ wird jetzt als schlackearmer Russ in den Reaktor zurückgefahren. Aus dem Wasserkreislauf wird praktisch russfreie Schlacke ausgeschleust. Russfreie Schlacke ist im Gegensatz zu den hauptsächlich aus Russ bestehenden Agglomeraten leicht filtrierbar, der russfreie Filterkuchen ist praktisch wasserfrei.

Russfreie Schlacke ist darüber hinaus ein Wertstoff, aus dem die Schwermetalle, besonders Vanadium und Nickel, auf wirtschaftliche Weise gewonnen werden können.

Damit entfällt die sonst unumgängliche Deponie eines schwermetallhaltigen Russ-Schlacke-Gemisches, die erhebliche Umweltprobleme mit sich bringt.

Anhand der Zeichnungen wird das erfindungsgemässe Verfahren beispielhaft beschrieben:

In den Figuren bedeutet 1 die Leitung, durch die die Russ-Schlacke-Suspension aus der Russwäsche in die Russextraktion gelangt, 2 und 3 sind die weiterführenden Leitungen zum Absitzbehälter. 4, 10, 11a, 11b und 11c bedeuten die Zuleitungen für Benzin zur Russextraktion, 5 und 6 sind die Ableitungen für die Benzinphase und die Wasserphase aus dem Absitzbehälter. 7 bedeutet die «Harfe», bestehend aus einem Verteilerrohr 7a, einem Sammelrohr und einer Reihe paralleler Röhrchen 7c, von denen hier vier gezeichnet sind, deren Anzahl sich jedoch nach dem aktuellen Durchsatz richtet.

Nicht eingezeichnet sind die Absperrarmaturen an jedem einzelnen Röhrchen der Harfe, mit deren Hilfe bei Durchsatzänderung die Zahl der wirksamen Rörchen gewählt werden kann. 8 bedeutet ein einfaches Mischorgan für Benzin und Wasser, das ein statischer Mischer oder ein Mischventil sein kann. 9 ist ein Absitzbehälter und 12 ein Hochleistungsdispergiergerät.

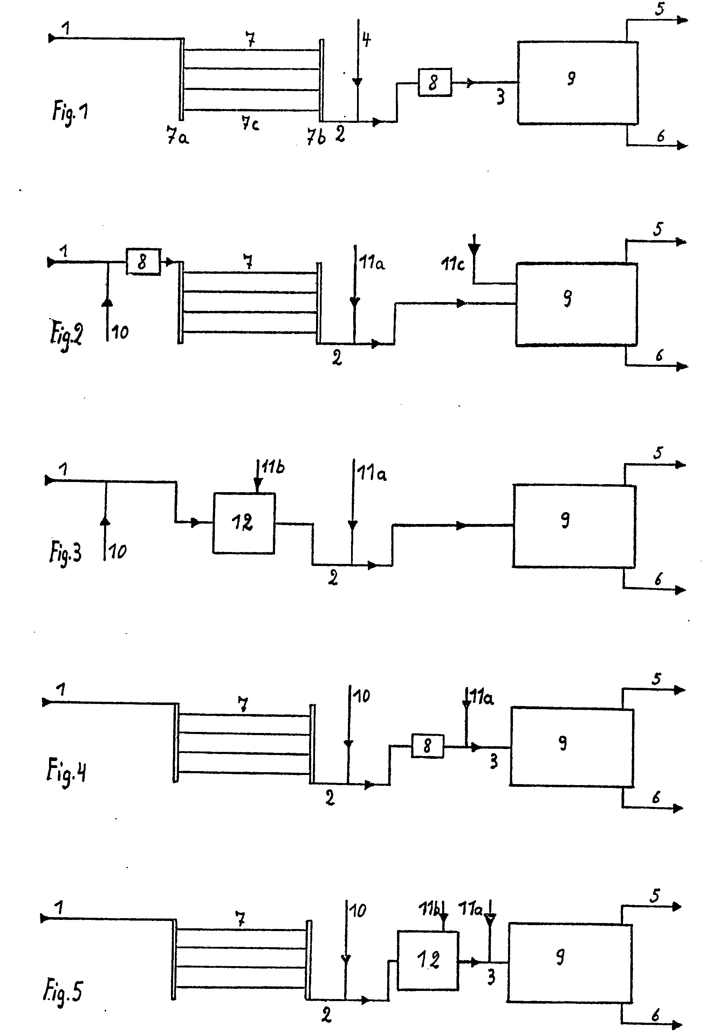

In Fig. 1 passiert die wässrige Russ-Schlacke-Suspension, die durch Leitung 1 aus der Russwäsche kommt, die «Harfe» 7 und wird durch Leitung 2 zum Mischer 8 weitergefördert. In diese Leitung 2 wird über Leitung 4 die für die Extraktion benötigte Benzinmenge zugegeben. Im Mischer 8 werden die beiden Ströme vermischt; das Gemisch wird dann durch Leitung 3 zum Absitzbehälter 9 gefördert, wo sich die Phasen trennen. Über Leitung 5 wird eine Suspension praktisch des gesamten Russes mit einem geringen Anteil Schlacke in dem aus Leitung 4 zugeführten Benzin abgezogen, während über Leitung 6 praktisch russfreies schlackehaltiges Wasser zur erneuten Russwäsche entnommen wird; hieraus wird ein Anteil des Wassers abgezweigt und nach Filtration verworfen.

In einer anderen Ausführungsform nach Fig. 2 wird zur Russ-Schlacke-Suspension in Leitung 1 vor Einleiten in die «Harfe» 7 über Leitung 10 nur 10 bis 20% der benötigten Benzinmenge zugesetzt und im Mischer 8 vorgemischt. Die restlichen 80 bis 90% der Benzinmenge werden über Leitung 11a nach Passieren der «Harfe» 7 während des Weitertransports durch Leitung 2 zum Absitzbehälter 9 oder alternativ durch Leitung 11c direkt in den Absitzbehälter 9 zugesetzt; die weitere Führung und Auftrennung des Gemisches erfolgt wie oben beschrieben.

In einer anderen Ausführungsform nach Fig. 3 wird die Russ-Schlacke-Suspension aus Leitung 1 nach Zusatz von 10 bis 20% der benötigten Benzinmenge durch das Hochleistungsdispergiergerät 12 und weiter durch Leitung 2 in den Absitzbehälter 9 geleitet. Auf diesem Weg wird die restliche Benzinmenge (80 bis 90%) über Leitung 11a in Leitung 2 zugeführt; diese Benzinmenge kann auch über Leitung 11b

direkt in das Dispergiergerät 12 geleitet werden, sofern sichergestellt ist, dass diese grosse Benzinmenge nicht die Dispergiervorrichtung durchläuft. Die weitere Aufarbeitung des Gemisches im Absitzbehälter erfolgt wie oben beschrieben.

In einer weiteren Ausführungsform nach Fig. 4 wird die Russ-Schlacke-Suspension aus Leitung 1 zunächst durch die «Harfe» 7 geführt, auf dem weiteren Weg durch Leitung 2 wird aus Leitung 10 eine Teilmenge von 10 bis 20% des für die Russextraktion benötigten Benzins zugesetzt und anschliessend im Mischer 8 vermischt. Auf dem weiteren Wege durch Leitung 3 wird aus Leitung 11a die Restmenge Benzin (80 bis 90%) zugesetzt, dann wird das Gemisch in den Absitzbehälter 9 geleitet, wo die Weiterverarbeitung in schon beschriebener Weise erfolgt.

Eine andere Ausführungsform (Fig. 5) stellt eine Kombination von «Harfe» und Hochleistungsdispergiergerät dar. Der Aufbau entspricht der Ausführungsform nach Fig. 4 mit dem Unterschied, dass hier anstelle des einfachen Mischers ein Hochleistungsdispergiergerät 12 eingesetzt ist; diese Kombination bringt besonders gute Ergebnisse bei der Abtrennung der Schlacke aus dem Russ. Auch hier kann die grosse Benzinmenge statt durch Leitung 11a in Leitung 3 auch durch Leitung 11b direkt in das Dispergiergerät 12 eingeführt werden, wenn sie nicht die Dispergiervorrichtung durchläuft.

Eine weitere Variante zu Fig. 5, bei der «Harfe» und Hochleistungsdispergiergerät gegeneinander ausgetauscht sind, ist möglich.

*Vergleichsbeispiel 1*

Aus der Russwäsche einer partiellen Oxidation von schwerem Heizöl wird eine wässrige Suspension abgezogen, die 4,8 g/l Feststoff enthält. Der Feststoff besteht aus Agglomeraten von Russ mit einem geringen Ascheanteil; der Veraschungsrückstand beträgt 10,5%, auf den Feststoff bezogen. Dieser Suspension werden (entsprechend DE-PS 1 216 259) 40 Vol.-% Spezialbenzin zugesetzt, die Komponenten werden in einem statischen Mischer gemischt, das Gemisch in einen Absitzbehälter geleitet, aus dem oben die Benzin- und unten die Wasserphase abgezogen werden. Die Wasserphase enthält nur 85 mg/l Feststoff, während fast der gesamte Feststoff in der Benzinphase vorliegt. Der Veraschungsrückstand ist mit 10,3% bzw. 10,9% des Feststoffgehalts innerhalb der Messgenauigkeit unverändert gegenüber dem Veraschungsrückstand im Feststoff der ursprünglichen Suspension.

*Vergleichsbeispiel 2*

Die gleiche Russ-Schlacke-Suspension wie im Vergleichsbeispiel 1 wird in bekannter Weise zunächst mit 4 Vol.-% Spezialbenzin versetzt, die Komponenten werden vermischt. Anschliessend werden sofort weitere 36 Vol.-% Spezialbenzin zugesetzt und das gesamte Gemisch in den Absitzbehälter übergeführt. Die aus dem Behälter oben abgezogene Benzinphase enthält wieder praktisch den gesamten Feststoff mit einem Veraschungsrückstand von 10,6%, während die unten aus dem Behälter abgezogene Wasserphase 90 mg/l Feststoff mit einem Veraschungsrückstand von 10,7% enthält.

Nach der Methode der beiden Vergleichsbeispiele findet nahezu kein Austrag von Schlacke in die Wasserphase statt, sondern fast die ganze Schlacke verbleibt beim Russ und wird schliesslich mit diesem zusammen in den Reaktor zurückgeführt.

*Beispiel 1*

Die Russ-Schlacke-Suspension aus den Vergleichsbeispielen wird, entsprechend der Fig. 2, zunächst mit 4 Vol.-% Benzin versetzt und, nach Vormischung in einer Mischvorrichtung, durch eine «Harfe» mit 12 parallelen Röhrchen von 1 cm Durchmesser und 2 m Länge geleitet. Der Druckabfall über der «Harfe» beträgt etwa 5 bar und die mittlere Strömungsgeschwindigkeit in den Rohren 8 bis 15 m/s. Nach Austritt aus der «Harfe» werden weitere 36 Vol.-% Benzin zugesetzt, und die gesamte Mischung wird in den Absitzbehälter zur Phasentrennung geleitet.

Die Benzinphase enthält wieder fast den gesamten Russ, der Veraschungsrückstand beträgt jetzt aber nur noch 7,5% des Feststoffes. Die im Gegensatz zu den Vergleichsbeispielen jetzt dunkle wässrige Phase enthält 165 mg/l Feststoff mit einem Aschegehalt von 148 mg/l, d.h., der Aschegehalt beträgt 90% des Feststoffes. Damit sind ca. 30% der Schlacke aus der ursprünglichen Russ-Schlacke-Suspension nahezu russfrei in die Wasserphase übergegangen.

*Beispiel 2*

Die Russ-Schlacke-Suspension der vorigen Beispiele wird entsprechend Fig. 3 mit 4 Vol.-% Spezialbenzin versetzt und der Behandlung in einem Hochleistungsdispergiergerät unterworfen. Anschliessend werden über die Leitung 11a weitere 36 Vol.-% Benzin zugesetzt und die gesamte Mischung zur Phasentrennung in den Absitzbehälter geleitet. Die oben aus dem Absitzbehälter abgezogene Benzinphase enthält wieder praktisch den gesamten Russ, jetzt aber mit einem Veraschungsrückstand von nur noch 4,9% des Feststoffes, während die unten abgezogene wässrige Phase 302 mg/l Feststoff mit einem Ascheanteil von 280 mg/l enthält, d.h., der Aschegehalt beträgt ca. 93% des Feststoffes. Damit sind ca. 60% der Schlacke nahezu russfrei in die Wasserphase übergegangen.

*Beispiel 3*

Die Russ-Schlacke-Suspension aus den vorangegangenen Beispielen wird gemäss Fig. 5 direkt durch die im Beispiel 1 beschriebene «Harfe» geleitet, anschliessend werden 4 Vol.-% Benzin zugesetzt, und die Mischung wird durch ein Hochleistungsdispergiergerät geführt. Über die Leitung 11a werden weitere 36 Vol.-% Benzin zugegeben und die Mischung wird in den Absitzbehälter zur Phasentrennung geleitet. Die Benzinphase enthält wieder fast den gesamten Russ, der Veraschungsrückstand beträgt jetzt aber nur noch 2, 3% des Feststoffes. Die Wasserphase enthält an Feststoff jetzt 420 mg/l, der Veraschungsrückstand beträgt 397 mg/l, d.h., 95% des Feststoffes. Die in der ursprünglichen Suspension enthaltene Schlacke ist zu 80% nahezu russfrei in die Wasserphase übergegangen, während nur noch 20% über die weitere Verarbeitung des Russes in die Gaserzeugung gelangen.

In einer technischen Anlage wurde gemessen, dass sich die Schlackekonzentration im Synthesegas bei Ausschleusung von 10% des Feststoffes in der Wasserphase ungefähr halbieren lässt und bei Ausschleusungen von 20% auf etwa ein Drittel zurückgeht. So geht der Schlackegehalt des Gases von 1,6 $g/m^3$ auf 0,76 bzw. 0,44 $g/m^3$ (jeweils auf den Normalzustand bezogen) zurück. Damit lassen sich Schlackekonzentrationen im Synthesegas erreichen, bei denen in den Gaskühlern keine Ablagerungen entstehen.

Die wesentlichen Daten aller Beispiele werden in Tabelle 1 zusammengestellt. Sie zeigt sehr übersichtlich, wie durch das erfindungsgemässe Verfahren die Asche in der Benzinphase abnimmt und in der für die Ausschleusung wichtigen wässrigen Phase zunimmt, wobei die Asche in der wässrigen Phase praktisch russfrei ist.

Tabelle 1

| | | | Vergleichs-beispiel 1 | Vergleichs-beispiel 2 | Beispiel 1 nach Figur 2 | Beispiel 2 nach Figur 3 | Beispiel 3 nach Figur 5 |
|---|---|---|---|---|---|---|---|
| wässrige Russ-Schlacke-Suspension (1 Liter) | Feststoff | (g) | 4,8 | 4,8 | 4,8 | 4,8 | 4,8 |
| | Russ | (g) | 4,3 | 4,3 | 4,3 | 4,3 | 4,3 |
| | Asche | (mg) | 506 | 506 | 506 | 506 | 506 |
| | Ascheanteil im Feststoff | (%) | 10,5 | 10,5 | 10,5 | 10,5 | 10,5 |
| Benzin-phase (0,4 Liter) | Feststoff | (g) | 4,7 | 4,6 | 4,65 | 4,5 | 4,4 |
| | Russ | (g) | 4,2 | 4,1 | 4,3 | 4,3 | 4,3 |
| | Asche | (mg) | 510 | 490 | 350 | 219 | 101 |
| | Ascheanteil im Feststoff | (%) | 10,9 | 10,6 | 7,5 | 4,9 | 2,3 |
| wässrige Phase (1 Liter) | Feststoff | (g) | 0,085 | 0,090 | 0,165 | 0,032 | 0,420 |
| | Russ | (g) | 0,076 | 0,080 | 0,017 | 0,020 | 0,020 |
| | Asche | (mg) | 8,8 | 9,6 | 148 | 280 | 397 |
| | Ascheanteil im Feststoff | (%) | 10,3 | 10,7 | 90 | 93 | 95 |

## Patentansprüche

1. Verfahren zur Herstellung von Synthese- oder Brenngasen durch partielle Oxidation schlackereicher Einsatzstoffe, wobei der entstehende Russ mittels Wasser aus dem Gas ausgewaschen und nach Abscheidung aus der so erhaltenen wässrigen Suspension von Russ-Schlacke-Agglomeraten mit Hilfe einer mit Wasser nicht mischbaren organischen Flüssigkeit in den Reaktor zurückgeführt wird, dadurch gekennzeichnet, dass man

— die Suspension von Russ-Schlacke-Agglomeraten in einem scherkrafterzeugenden Dispergiergerät behandelt,

— aus der wässrigen Phase einen Teil der russfreien Schlacke kontinuierlich ausschleust und

— aus der Phase der organischen Flüssigkeit schlackearmen Russ in den Synthesegasreaktor zurückführt.

2. Verfahren nach Anspruch 1, dadurch gekennzeichnet, dass als scherkrafterzeugendes Dispergiergerät entweder

— mehrere parallel geschaltete Rohre oder

— ein Dispergiergerät mit mechanisch erzeugten Scherkräften oder

— ein Ultraschallgerät oder

— eine Kombination solcher Geräte

verwendet werden.

## Claims

1. A process for the manufacture of synthesis gas or fuel gas by partial oxidation of a slag-rich starting material, wherein the resulting soot is washed out of the gas by means of water and is recycled to the reactor after having been separated from the thus obtained aqueous suspension of soot/slag agglomerates by means of a water-immiscible organic liquid, characterised in that the suspension of soot/slag agglomerates is treated in a dispersing apparatus which generates a shearing force, a part of the soot-free slag is continuosly removed from the aqueous phase, and low-slag soot from the phase of the organic liquid is recycled to the synthesis gas reactor.

2. A process according to claim 1, characterised in that as the dispersing apparatus which generates a shearing force there is used either a plurality of pipes connected in parallel or a dispersing apparatus with mechanically generated shearing forces or an ultrasonic apparatus or a combination of such apparatuses.

## Revendications

1. Procédé de fabrication de gaz de synthèse ou de gaz combustibles par oxydation de matières premières riches en scorie, le noir de carbone formé étant éliminé du gaz par lavage à l'eau et étant ramené au réacteur, après sa séparation de la suspension aqueuse d'agglomérats noir de carbone-scorie ainsi obtenue, à l'aide d'un liquide organique non miscible à l'eau, caractérisé per le fait que:

— on traite la suspension d'agglomérats noir de carbone-scorie dans un appareil de dispersion engendrant des forces de cisaillement,

— on élimine de la phase aqueuse, de façon continue, une partie de la scorie exempte de noir de carbone, et

— à partir de la phase de liquide organique, on ramène au réacteur à gaz de synthèse du noir de carbone pauvre en scorie.

2. Procédé selon la revendication 1, caractérisé par le fait qu'on utilise comme appareil de dispersion engendrant des forces de cisaillement:

— soit plusieurs tubes branchés en parallèle,

— soit un appareil de dispersion à forces de cisaillement engendrées mécaniquement,

— soit un appareil à ultrasons,

— soit une combinaison d'appareils de ce genre.

0 063 682

Fig.1

Fig.2

Fig.3

Fig.4

Fig.5

7